Europäisches Patentamt

European Patent Office

Office européen des brevets

(11) Veröffentlichungsnummer : **0 069 931**
**B1**

(12) # EUROPÄISCHE PATENTSCHRIFT

(45) Veröffentlichungstag der Patentschrift :
12.02.86

(21) Anmeldenummer : 82105896.3

(22) Anmeldetag : 02.07.82

(51) Int. Cl.⁴ : **G 05 D 23/19, B 61 D 27/00**

(54) **Schaltung zum Betrieb, Überwachung und Fehlerdiagnose einer Einkanal-Klimaanlage.**

(30) Priorität : **09.07.81 DE 3127024**

(43) Veröffentlichungstag der Anmeldung :
**19.01.83 Patentblatt 83/03**

(45) Bekanntmachung des Hinweises auf die Patenterteilung : **12.02.86 Patentblatt 86/07**

(84) Benannte Vertragsstaaten :
**AT BE CH FR IT LI NL**

(56) Entgegenhaltungen :
**DE-A- 3 111 281**
**FR-A- 2 131 025**
**FR-A- 2 471 560**
**BCC-NACHRICHTEN, Band 63, Nr. 4, 1981, Seiten
141-148, Mannheim (DE); R.KEMPF et al.: "Die Klimaanlagen der neuen Komfortwagen der Ägyptischen Eisenbahnen ".
ELEKTRISCHE BAHNEN, Band 78, Nr. 8, August 1980,
Seiten 214-221, München (DE) ; J. BRENNEISEN :
"Klimaanlagen in Reisezugwagen".**

(73) Patentinhaber : **BROWN, BOVERI & CIE Aktiengesellschaft
Kallstadter Strasse 1
D-6800 Mannheim 31 (DE)**

(72) Erfinder : **Remenyi, Karl, Dipl.-Ing.
Plattstrasse 10
D-6800 Mannheim (DE)**

(74) Vertreter : **Kempe, Wolfgang, Dr. et al
c/o Brown, Boveri & Cie AG Postfach 351
D-6800 Mannheim 1 (DE)**

## Beschreibung

Die Erfindung bezieht sich auf eine Schaltung für eine Einkanal-Klimaanlage eines Reisezug-Abteilwagen mit mindestens einem den Wärmegrundbedarf deckenden zentralen Luftbehandlungsgerät für die Vorlauftemperatur des Heizmediums und einem zentralen Steuergerät sowie diskreten Nachheizkörpern für die individuelle Einstellung der Abteiltemperatur in jedem Abteil, welche jeweils in Abhängigkeit von einem in jedem Abteil vorgesehenen Sollwertgeber über je ein Steuergerät gesteuert wird, wobei das Heizregister des zentralen Luftbehandlungsgerätes durch Schaltmittel intermittierend in Abhängigkeit von einer im zentralen Steuergerät aus der jeweiligen Einschaltdauer der Nachheizkörper der Abteile gebildeten Führungsgröße für die Vorlauftemperatur zu- bzw. abgeschaltet wird.

Eine solche Anordnung ist in der DE-Patentanmeldung 31 11 281 vorgeschlagen worden. Auch aus den DE-A 29 49 950 und FR-A 21 31 025 sind Reisezugwagen mit Einzelabteilen und einer Einkanal-Klimaanlage bekannt, bei denen zur individuellen Temperaturregelung in den Abteilen und zur Ausregelung von Störgrößen, die auf die Abteile unterschiedlich einwirken, in den Abteilen Nachheizkörper installiert sind. Die Klimaanlage weist dabei in der Regel ein unter dem Wagenkasten angeordnetes zentrales Luftbehandlungsgerät und ein Luftkanalsystem auf, über das die Luft in die Abteile geleitet wird.

Die Temperatur im Luftkanal wird mittels einer Vorlauftemperaturregeleinrichtung so geregelt, daß der Grundenergiebedarf gedeckt wird, das heißt, daß in wenigstens einem der Abteile die Nachheizkörper nicht zugeschaltet werden. Die Vorlauftemperaturregeleinrichtung wird von den Abteilreglern gesteuert, wobei als Kritierium die Einschaltdauer der einzelnen Nachheizkörper und die niedrigste geschwünschte Abteiltemperatur dient.

Wenn jedoch einer der Nachheizkörperstromkreise gestört ist, z. B. durch eine Leitungsunterbrechung oder ein Durchlegieren des Halbleiterschalters oder ein Kurzschluß oder wenn ein Masseschluß am Heizkörper eintritt, hat dies Auswirkungen auf die Vorlaufregeleinrichtung. Diese Störung führt in den meisten Fällen dann dazu, daß das Zusammenspiel von Abteilregler und Vorlaufregler gänzlich gestört wird. Wenn z. B. eine Leitung unterbrochen ist, erhält der Regler für die Nachheizkörper zwar dauernd ein Nachheizsignal, die Abteiltemperatur wird jedoch nicht verändert und die Vorlauftemperaturregeleinrichtung erhält, da die Abteiltemperatur zu niedrig ist, ein Einschaltsignal, und die Vorlauftemperatur im Luftkanal angehoben wird, wodurch in den übrigen Abteilen die gewünschte Temperatur ganz wesentlich überschritten werden kann. Sämtliche Abteile außer dem mit den gestörten Heizkörperkreis werden also überheizt.

Die Suche der Störung in der Werkstatt ist relativ aufwendig, weil die einzelnen Bauteile der Schaltung und die Leitung über den gesamten Wagen verteilt sind.

Es ist daher die Aufgabe der Erfindung, eine Einrichtung zu schaffen, bei der sich eine Störung in einem Nachheizkörperstromkreis auf die Vorlaufregeleinrichtung nicht auswirken kann und die andererseits erlaubt, mit geringem Aufwand festzustellen, ob und in welchem Abteil die Nachheizkörper gestört sind.

Die Lösung der gestellten Aufgabe besteht erfindungsgemäß bei der eingangs erwähnten Schaltung in der Anwendung der folgenden Merkmale:

a. ein Stromwandler in der Zuleitung zur Sammelschiene der Nachheizkörper,

b. ein mehrpoliger Umschalter in den Verbindungsleitungen zwischen jedem Steuergerät und den zugehörigen Regelgerät für die Abteiltemperatur,

c. ein fernbetätigbarer Wahlschalter, dessen wählbare Schaltkontakte jeweils an die Einschaltkontakte des Umschalters angeschlossen sind, wobei jeweils je ein Nachheizkörper in zyklischer Reihenfolge einschaltbar ist,

d. ein Prüfimpulsgenerator, der in bestimmten Zeitabständen Impulse für die Betätigung des Umschalters und für einen Durchlauf des Wahlschalters abgibt, und dessen einer Anschluß mit der Wurzel des Wahlschalters verbunden ist,

e. ein Verknüpfungs und Auswerteglied, mit einem Vergleichsgerät, in welchem in zyklischer Reihenfolge jeweils der im Stromwandler gemessene Stromwert mit einem im Gerät gespeicherten Nennstromwert der Nachheizkörper verglichen wird, und im Falle einer merklichen Abweichung des gemessenen Wertes vom Nennstromwert ein Fehlersignal gegeben wird, welches Gerät mit dem Stromwandler und dem Prüfimpulsgenerator sowie dem Antriebsmechanismus des Wahlschalters in Verbindung steht,

f. ein fernbetätigbaren Schalter in der Verbindungsleitung zwischen den Steuergeräten für die Nachheizkörper und dem zentralen Steuergerät SLa welche Schalter bei Meldung eines Fehlersignales im Vergleichsgerät geöffnet sind.

Zur Erleichterung der Überprüfung der Klimaanlage nach Außerbetriebnahme des Reisezugwagens ist weiterhin ein Speichergerät mit Anzeigegliedern für jeden der Nachheizkörper für die Meldung des Zustandes « Betriebsbereit » und « Gestört » vorgesehen, durch welches zu jedem Zeitpunkt überprüfbar ist, ob alle Nachheizkörper einwandfrei arbeiten.

Dabei soll es auch möglich sein festzustellen, welcher Art der Fehler ist. Daher ist bei einer Weiterbildung der Erfindung vorgesehen, daß das Speichergerät mit Anzeigegliedern für jeden der Nachheizkörper für die Meldung des Zustandes « Betriebsbereit » und « defekte Heizkörper » und « Unterbrechung » versehen ist, wobei die zweite Anzeige bei einem den Nennstromwert der Heizkörper übersteigenden Stromwert im Stromwandler und die dritte Anzeige bei Fehlen eines den Stromwandler durchfließenden Stromes erfolgt. Durch dieses Gerät wird auch eine Diagnose im Falle einer Störung ermöglicht, sodaß für die Instandsetzung einer defekten Anlage langwierige Sucharbeiten vermieden werden können. Weiter Einzelheiten und vorteilhafte Weiterbildungen der Erfindung ergeben sich aus dem im folgenden beschriebenen und in den Zeichnungen dargestellten Ausführungsbeispielen.

Es zeigen :

Figur 1 ein Blockschaltbild für eine Anordnung nach der Erfindung ;

Figur 2 einen Schaltplan für eine Anordnung gemäß der Erfindung.

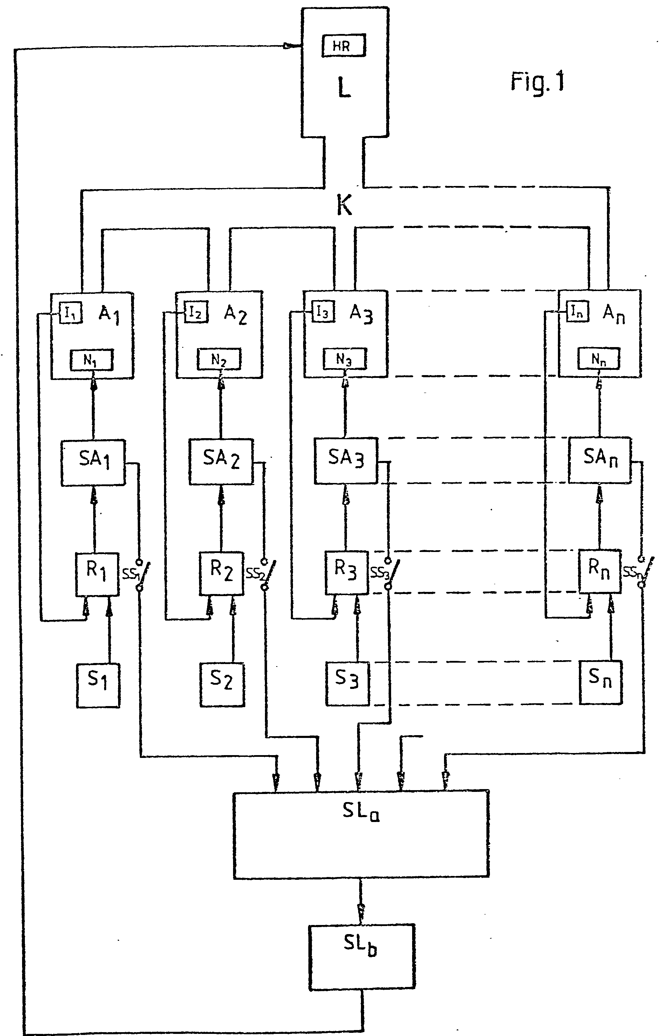

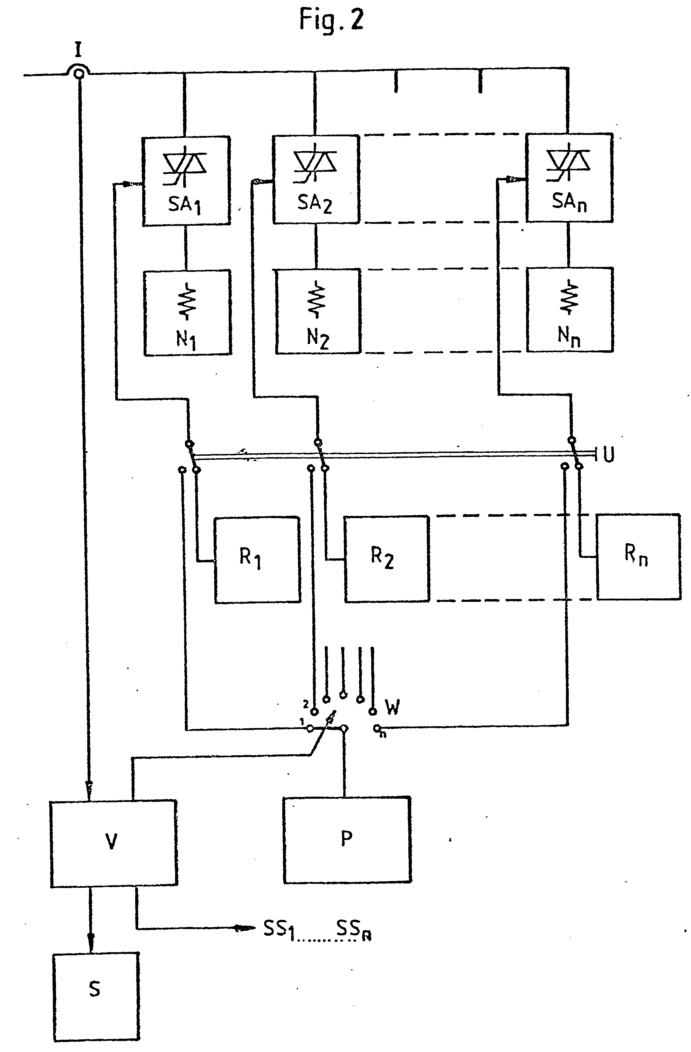

In den beiden Schaltschemen Fig. 1 und 2 ist mit L das Luftbehandlungsgerät bezeichnet, während der für die Verbindung des Luftbehandlungsgerätes mit den Abteilen A1, A2 ... An dienende Luftkanal mit K bezeichnet ist. In den Abteilen sind Nachheizkörper N1, N2 ... Nn sowie Meßfühler I1, I2 ... In für die Ermittlung des Isttemperaturwertes angeordnet. Die Temperaturfühler I1, I2 ... In sind mit einem Steuergerät und Stellglied für den Nachheizkörper mit der Bezeichnung SA1, SA2 ... SAn verbunden. An diese kombinierten Steuergeräte und Stellgliedanordnungen ist auch in jedem Abteil ein Sollwertgeber für Abteiltemperatur S1, S2 ... Sn angeschlossen. Jedes der kombinierten Steuer- und Stellglieder SA1, ... SAn weist weiterhin eine Verbindung mit dem Steuergerät SLa für das Luftbehandlungsgerät auf. Durch diese Verbindung wird die jeweilige Einschaltdauer der einzelnen Steuergeräte SA1, ... SAn zu dem Steuergerät SLa übertragen. Dem Steuergerät SLa ist weiterhin ein Stellglied SLb für das Heizregister HR des Luftbehandlungsgerätes nachgeschaltet.

Weitere Details der Erfindung sind aus dem Schaltplan Fig. 2 zu entnehmen. Dort ist mit I ein Stromwandler bezeichnet, der in der Zuleitung zu den Steuer und Stellgliedern SA1, ... SAn angeordnet ist. Als Schaltglieder für die Stellglieder SA1, ... SAn sind hier Triacs vorgesehen, die über Verbindungsleitungen L1, L2 ... Ln, jeweils an die Wurzel eines Umschalters U angeschlossen sind, dessen einer Schaltkontakt jeweils mit dem zugehörigen Regelgerät R1, R2 ... Rn, und dessen andere Schaltkontakte mit je einem der Kontakte eines Wahlschalters W verbunden sind. Dieser Wahlschalter ist an der Wurzel mit dem Prüfimpulsgenerator P verbunden. Dieses Gerät ist mit dem Verknüpfungs- und Auswertegerät V elektrisch verbunden, an welches auch der Stromwandler I angeschlossen ist. Vom Verknüpfungs- und Auswertegerät V sind jeweils Verbindungsleitungen zu dem Betätigungsgerät des Wahlschalters W und zu dem Fernantrieb des Umschalters U vorgesehen. Mit dem Verknüpfungs- und Auswertegerät sind weiterhin fernbetätigbare Schalter SS1, SS2 ... SSn verbunden, durch welche die Verbindungsleitung zwischen dem Steuergerät SA1, SA2 ... SAn und dem zentralen Steuergerät SLA unterbrechbar sind.

Durch diese Schalter wird wie bereits oben erwähnt, im Falle des Anstehens eines Störungssignales die jeweilige Verbindungsleitung zwischen dem Abteilsteuergerät und dem zentralen Steuergerät unterbrochen.

An das Verknüpfungs- und Auswertegerät V ist weiterhin ein Speichergerät für Diagnosezwecke S angeschlossen, in welchem Anzeigen für jedes Abteil mit den Anzeigegliedern « Betriebsbereit », « Leitungsunterbrechung » und « defekte Heizkörper » vorgesehen sind.

Bei der in Fig. 2 dargestellten Anordnung werden in bestimmten Zeitabständen, z. B. im 10 Minuten-Abstand, die Steuergeräte S1A, SA2, ... SAn der Nachheizkörper N1, N2 ... Nn von ihren zugehörigen Regelgeräten R1, R2 ... Rn mit Hilfe des erwähnten Umschalters U abgeschaltet und an den Wahlschalter W angeschaltet, der die einzelnen Nachheizkörper N1, N2, ... Nn nacheinander mit dem Prüfimpulsgenerator P verbindet, der kurzzeitig jeweils einem der Steuergeräte SA1 oder SA2 oder ... Nn einen Einschaltimpuls gibt, so daß der zugehörige Nachheizkörper N1 oder N2 oder ... Nn stromdurchflossen ist. Der diesen einen Nachheizkörper N1 oder N2 oder ... Nn durchfließende Strom wird im Stromwandler I gemessen, und der Meßwert an das Verknüpfungs- und Auswertegerät V gegeben, wo ein Vergleich mit dem eingespeicherten Stromnennwert des Nachheizkörpers N1 bzw. N2 bzw. ... Nn und dem gemessenen Wert erfolgt. Bei einer merklichen Abweichung des gemessenen Wertes vom Stromnennwert wird ein Fehlersignal ausgelöst, durch welches durch einen fernbetätigbaren Schalter SS1 bzw. SS2 bzw. ... SSn die Verbindungsleitung zwischen dem Steuergerät SA1 bzw. SA2 bzw. ... SAn und dem zentralen Steuergerät SLa unterbrochen wird. Auf diese Weise wird erreicht, daß dem zentralen Steuergerät SLa für das Luftbehandlungsgerät L nur noch richtige Informationen für die Einschaltdauer für das entsprechende Nachheizgerät N1 bzw. N2 bzw. ... Nn übermittelt werden. Es ist also ausgeschlossen, daß im Falle einer Störung dem zentralen Steuergerät SLa eine Einschaltdauer von 100 % von einem gestörten Abteil A1 bzw. A2 bzw. ... An übermittelt wird, durch welches eine Anhebung der Vorlauftemperatur und damit eine Uberheizung der nicht gestörten Abteile erfolgen könnte.

Es ergibt sich also nicht nur eine Erhöhung des Komforts, sondern auch eine Einsparung gegenüber der oben erwähnten Anordnung im Falle einer Störung in einem Abteil. Im Abteil A1 bzw. A2 bzw. ... An mit gestörtem Nachheizkörper N1 bzw. N2 bzw. ... Nn ergibt sich zwar eine geringfügig zu niedrige Temperatur, wenn das Abteil unbesetzt ist, aber der Vorteil, daß die nichtgestörten Abteile die gewünschte eingestellte Temperatur aufweisen.

**Patentansprüche**

1. Schaltung für eine Einkanal-Klimaanlage eines Reisezug-Abteilwagens mit mindestens einem, den Wärmegrundbedarf deckenden zentralen Luftbehandlungsgerät (L) für die Vorlauftemperatur des Heizmediums und einem zentralen Steuergerät (SLa) sowie diskreten Nachheizkörpern (N1, N2 ... Nn) für die individuelle Einstellung der Abteiltemperatur in jedem Abteil, welche jeweils in Abhängigkeit von einem in jedem Abteil vorgesehenen Sollwertgeber S1 ... Sn über je ein Steuergerät (SA1, SA2 ... SAn) gesteuert wird, wobei das Heizregister (HR) des zentralen Luftbehandlungsgerätes durch Schaltmittel intermittierend in Abhängigkeit von einer im zentralen Steuergerät (SLa) aus der jeweiligen Einschaltdauer der Nachheizkörper (N1, N2 ... Nn) der Abteile gebildeten Führungsgröße für die Vorlauftemperatur zu- bzw. abgeschaltet wird, gekennzeichnet durch die folgenden Merkmale :

a. ein Stromwandler (I) in der Zuleitung zur Sammelschiene der Nachheizkörper (N1, N2 ... Nn),

b. ein mehrpoliger Umschalter (U) in den Verbindungsleitungen zwischen jedem Steuergerät (SA1, SA2. ... SAn) und den zugehörigen Regelgeräten (R1, R2, ... Rn) für die Abteiltemperatur,

c. ein fernbetätigbarer Wahlschalter (W), dessen wählbare Schaltkontakte jeweils an je einem Einschaltkontakt des Umschalters (U) angeschlossen sind, wobei jeweils je ein Nachheizkörper in zyklischer Reihenfolge einschaltbar ist,

d. ein Prüfimpulsgenerator (P), der in bestimmten Zeitabständen Impulse für die Betätigung des Umschalters (U) und für einen Durchlauf des Wahlschalters (W) abgibt, und dessen einer Anschluß mit der Wurzel des Wahlschalters (W) verbunden ist

e. ein Verknüpfungs und Auswerteglied (V) mit einem Vergleichsgerät, in welchem in zyklischer Reihenfolge jeweils der im Stromwandler (I) gemessene Stromwert mit einem im Vergleichsgerät gespeicherten Nennstromwert der Nachheizkörper verglichen wird, und im Falle einer merklichen Abweichung des gemessenen Wertes vom Nennstromwert ein Fehlersignal gegeben wird, welches Vergleichsgerät mit dem Stromwandler (I) und dem Prüfimpulsgenerator (P) sowie dem Antriebsmechanismus des Wahlschalters (W) in Verbindung steht,

f. je ein fernbetätigbarer Schalter (SS1, SS2, ... SSn) in der Verbindungsleitung zwischen den Steuergeräten (SA1, SA2, ... SAn) für die Nachheizkörper und dem zentralen Steuergerät (SLa), welche Schalter bei Meldung eines Fehlersignales im Vergleichsgerät geöffnet sind.

2. Schaltung nach Anspruch 1, gekennzeichnet durch ein Speichergerät (SP) mit Anzeigegliedern für jeden der Nachheizkörper (N1, N2 ... Nn) für die Meldung des Zustandes « Betriebsbereit » und « Gestört ».

3. Schaltung nach Anspruch 1, gekennzeichnet durch ein Speichergerät mit Anzeigegliedern für jeden der Nachheizkörper (N1, N2 ... Nn) für die Meldung des Zustandes « Betriebsbereit » und « defekte Heizkörper » und « Unterbrechung », wobei die zweite Anzeige bei einem den Nennstromwert der Heizkörper übersteigenden Stromwert am Stromwandler und die dritte Anzeige bei Fehlen eines den Stromwandler durchfließenden Stromes erfolgt.

## Claims

1. Circuit for a single-duct air-conditioning installation of a passenger compartment coach with at least one central air-conditioning device (L), covering the basic heat requirement, for the flow temperature of the heating medium and with a central control device (SLa) and discrete supplementary heaters (N1, N2 ... Nn) for individual setting of the compartment temperature in each compartment, which in each case is controlled as a function of a set value generator S1 ... Sn, provided in each compartment via one control device for each (SA1, SA2 ... SAn), the heater coil (HR) of the central air-conditioning device being cut in and out intermittently by switching means as a function of a command variable for the flow temperature formed in the central control device from the particular duty cycle of the supplementary heaters (N1, N2 ... Nn) of the compartments, characterised by the following features :

a. A current transformer (I) in the supply line to the bus bar of the supplementary heaters (N1, N2 ... Nn),

b. A multipole change-over switch (U) in the connecting lines between each control device (SA1, SA2, ... SAn) and the associated regulating devices (R1, R2, ... Rn) for the compartment temperature,

c. A remotely actuated selector switch (W), the selectable switching contacts of which are in each case connected to one single-throw contact each of the change-over switch (U), in each case one supplementary heater being energisable in turn in cyclical sequence,

d. A test pulse generator (P), which emits at certain time intervals pulses for the actuation of the change-over switch (U) and for one passage of the selector switch (W), and one terminal of which generator is connected to the root of the selector switch (W).

e. A logic and evaluation element (V) with a comparison device, in which the current value measured in the current transformer (I) in each case is compared in cyclical sequence with a nominal current value of the supplementary heaters stored in the comparison device and, in the event of a noticeable deviation of the measured value from the nominal current value, an error signal is given, which comparison device is in connection with the current transformer (I) and the test pulse generator (P) as well as with the drive mechanism of the selector switch (W),

f. One remotely actuated switch (SS1, SS2, ... SSn) each in the connecting line between the control devices (SA1, SA2, ... SAn) for the supplementary heaters and the central control device (SLa), which switches are opened when an error signal is announced in the comparison device.

2. Circuit according to Claim 1, characterised by a storage device (SP) with display elements for each of the supplementary heaters (N1, N2 ... Nn) for announcement of the condition « operational » and « faulty ».

3. Circuit according to Claim 1, characterised by a storage device with display elements for each of the supplementary heaters (N1, N2 ... Nn) for announcement of the condition « operational » and « defective heater » and « interruption », the second display taking place when there is a current value at the current transformer exceeding the nominal current value of the heaters and the third display taking place in the absence of a current flowing through the current transformer.

**Revendications**

1. Montage pour installation de climatisation monocanal d'une voiture à compartiments de train de voyageurs, comportant au moins un appareil central de conditionnement d'air (L) couvrant la consommation thermique de base pour la température aller du fluide chauffant et un appareil central de commande (SLa) ainsi que des radiateurs de post-chauffage discrets (N1, N2 ... Nn) pour le réglage individuel de la température des compartiments dans chacun de ceux-ci, laquelle est commandée chaque fois en fonction d'un transmetteur de valeur de consigne S1 ... Sn prévu dans chaque compartiment, par l'intermédiaire chacun d'un appareil de commande (SA1, SA2 ... SAn), le registre de chauffage (HR) de l'appareil central de conditionnement d'air est mis par intermittence en circuit et/ou hors circuit par des dispositifs de commutation en fonction d'une grandeur de référence pour la température aller, constituée, dans l'appareil central de commande (SLa), à partir de la durée d'enclenchement des radiateurs de post-chauffage (N1, N2 ... Nn) des compartiments, caractérisé par le fait qu'il comprend :

a. un transformateur d'intensité (I) dans la ligne d'amenée à la barre omnibus des radiateurs de post-chauffage (N1, N2 ... Nn),

b. un commutateur multipolaire (U) dans les lignes de liaison entre chaque appareil de commande (SA1, SA2 ... SAn) et les appareils de réglage correspondants (R1, R2 ... Rn) pour la température des compartiments,

c. un sélecteur télécommandable (W) dont les contacts de commutation que l'on peut sélectionner sont raccordés chacun à un contact d'enclenchement du commutateur (U), les radiateurs de post-chauffage pouvant être mis en circuit dans un ordre cyclique,

d. un générateur d'impulsions de contrôle (P) qui délivre, à intervalles de temps déterminés, des impulsions pour la commande du commutateur (U) et pour un cycle du sélecteur (W), et dont l'une des connexions est reliée au contact commun du sélecteur (W),

e. un circuit logique et d'évaluation (V) avec un comparateur, dans lequel est comparée à chaque fois, selon un ordre cyclique, l'intensité mesurée dans le transformateur de courant (I), à une valeur nominale d'intensité des radiateurs de post-chauffage, mémorisée dans ledit comparateur, et, en cas d'écart notable de la valeur mesurée par rapport à la valeur nominale d'intensité, un signal d'erreur est délivré, ledit comparateur étant relié au transformateur d'intensité (I) et au générateur d'impulsions de contrôle (P) ainsi qu'au mécanisme de commande du sélecteur (W),

f. un interrupteur télécommandable (SS1, SS2 ... SSn) dans la ligne de liaison entre l'appareil de commande (SA1, SA2 ... SAn) de chacun des radiateurs de post-chauffage et l'appareil central de commande (SLa), lequel interrupteur est ouvert lorsqu'un signal d'erreur est annoncé dans le comparateur.

2. Montage selon la revendication 1, caractérisé par un dispositif à mémoire (SP) avec organes indicateurs pour chacun des radiateurs de post-chauffage (N1, N2 ... Nn) pour l'annonce de l'état « En ordre de marche » et « En panne ».

3. Montage selon la revendication 1, caractérisé par un dispositif à mémoire avec organes indicateurs pour chacun des radiateurs de post-chauffage (N1, N2 ... Nn) pour l'annonce de l'état « En ordre de marche », « Radiateurs défectueux » et « Interruption », la seconde annonce ayant lieu pour une intensité dépassant, au transformateur d'intensité, la valeur nominale d'intensité des radiateurs et la troisième annonce ayant lieu si le transformateur d'intensité n'est traversé par aucun courant.

Fig.1

0 069 931

Fig. 2